# EUROPEAN PATENT APPLICATION

(11) **EP 4 814 577 A1**
(43) Date of publication of application: **30.09.2026**
(21) Application number: 26150959.0
(22) Date of filing: 09.01.2026
(51) Int. Cl.: G03B 21/53, G02B 7/04, G02B 7/08, G01B 7/00, G03B 3/10, G02B 7/09, G02B 7/28

(54) **FOCUSING DEVICE AND PROJECTION DEVICE**

(30) Priority: 26.03.2025 CN 202520556494 U; 03.04.2025 CN 202520633359 U
(71) Applicant: Anker Innovations Technology Co., Ltd., Changsha, Hunan 410205 (CN)
(72) Inventor: TANG, Xiaofeng, Changsha City, 410205 (CN)
(74) Representative: De Arpe Tejero, Manuel

(57) **Abstract**

A focusing device (100) and a projection device. The focusing device (100) includes: a focusing lens (110), including a focusing barrel (111) and a lens body (112)lens body (112) having an optical axis (AA)lens body (112) and movably disposed on the focusing barrel (111) along an extending direction of the optical axis (AA); a focusing member (120), rotatably disposed on the focusing barrel (111) around the optical axis (AA), and in transmission fit with the lens body (112); a magnetic member (130); and a magnetic sensor (140), configured to detect a magnetic signal of the magnetic member (130). One of the magnetic member (130) and the magnetic sensor (140) is fixedly disposed relative to the focusing member (120), and the other t of the magnetic member (130) and the magnetic sensor (140) is fixedly disposed relative to the focusing barrel (111).

## Description

### TECHNICAL FIELD

The present disclosure relates to the field of projection technologies, and in particular to a focusing device and a projection device.

### BACKGROUND

A working principle of a projector may be that light may be irradiated on an image display element to generate an image, and projecting may be performed through a lens. When the projector projects images of different sizes, required focal lengths may be different. When the focal length is incorrect, the image may be blurry.

In the related art, a projection lens may include a lens barrel and a lens telescopically arranged in the lens barrel. The lens barrel may be rotatably fitted with the lens. When focusing is required, the lens may be driven to rotate relative to the lens barrel, such that it may be enable the lens to move axially when the lens rotates, thereby implementing focusing.

However, relative rotation between the lens and the lens barrel may accelerate wear, resulting in reducing service life.

### SUMMARY OF THE DISCLOSURE

Some embodiments of the present disclosure may provide a focusing device and a projection device. When a lens body telescopes, the lens body may not rotate, such that it may be possible to enable wear between the lens body and the focusing barrel to be relatively less, and thus the service life may be relatively longer.

According to a first aspect, some embodiments of the present disclosure may provide a focusing device. The focusing device may include a focusing lens, including a focusing barrel and a lens body, where the lens body may have an optical axis, the lens body may be movably disposed on the focusing barrel along an extending direction of the optical axis; a focusing member, rotatably disposed on the focusing barrel around the optical axis, and in transmission fit with the lens body, where the focusing member may be capable of driving the lens body to move along the extending direction of the optical axis in a case where the focusing member rotates, and the lens body does not rotate relative to the focusing barrel; a magnetic member; and a magnetic sensor, configured to detect a magnetic signal of the magnetic member. One of the magnetic member and the magnetic sensor may be fixedly disposed relative to the focusing member, and the other of the magnetic member and the magnetic sensor may be fixedly disposed relative to the focusing barrel.

According to a second aspect, some embodiments of the present disclosure may provide a focusing device. The focusing device may include a focusing lens, including a focusing barrel and a lens body, where the lens body may have an optical axis, the lens body may be movably disposed on the focusing barrel along an extending direction of the optical axis; a focusing member, rotatably disposed on the focusing barrel around the optical axis, and in transmission fit with the lens body, where the focusing member may be capable of driving the lens body to move along the extending direction of the optical axis in a case where the focusing member rotates, and the lens body does not rotate relative to the focusing barrel; a magnetic member; and a magnetic sensor, configured to detect a magnetic signal of the magnetic member. One of the magnetic member and the magnetic sensor may be fixedly disposed relative to the lens body, and the other of the magnetic member and the magnetic sensor may be fixedly disposed relative to the focusing barrel.

According to a third aspect, some embodiments of the present disclosure may provide a projection device. The projection device may include the focusing device according to any one of the above-mentioned embodiments, and an optical assembly. The lens body may be disposed at a light-emitting side of the optical assembly.

Technical effect of some embodiments of the present disclosure may be described as follow. When the focusing device provided in the embodiments of the present disclosure performs focusing, the lens body may not rotate relative to the focusing barrel, such that it may be possible to enable the wear between the lens body and the focusing barrel to be relatively less, and thus the service life may be relatively longer. A gap between the lens body and the focusing barrel may be less, such that it may be capable of preventing dust and liquid from entering interior as much as possible, thereby improving a capability for dust-proof and moisture-proof. Moreover, the focusing device may be more stable during transportation or movement, which may be less likely to focus deviation caused by shaking.

### BRIEF DESCRIPTION OF THE DRAWINGS

In order to illustrate the technical solutions more clearly in the embodiments of the present disclosure, the following will be briefly described in the description of the embodiments required to use the attached drawings. It is obvious that the following description of the attached drawings are only some of the embodiments of the present disclosure, and those skilled in the art, without creative work, can also obtain other attached drawings based on these drawings.
FIG. 1 is a structural schematic view of a focusing device according to some embodiments of the present disclosure.
FIG. 2 is a structural schematic view of the focusing device according to some embodiments of the present disclosure.
FIG. 3 is a structural schematic view of the focusing device according to some embodiments of the present disclosure.
FIG. 4 is a structural schematic view of the focusing device according to some embodiments of the present disclosure.
FIG. 5 is a block diagram of the focusing device according to some embodiments of the present disclosure.

Explanation of reference signs: 100, focusing device; 110, focusing lens; 111, focusing barrel; 112, lens body; 120, focusing member; 120a, spiral groove; 130, magnetic member; 140, magnetic sensor; 150, driving member; 160, distance sensor; 170, control module; 180, transmission member; AA, optical axis.

### DETAILED DESCRIPTION

The technical solutions in the embodiments of the present disclosure will be clearly and completely described below in conjunction with the accompanying drawings in the embodiments of the present disclosure. Obviously, the described embodiments are only a part of the embodiments of the present disclosure, and not all of them. Based on the embodiments in the present disclosure, all other embodiments obtained by those skilled in the art without making creative labor fall within the scope of the present disclosure.

It should be noted that all directional indications (such as up, down, left, right, forward, backward, ...) in the embodiments are used only to explain relative position relationship, relative movement, and the like, between various components in a particular pose (as shown in the drawings). When the particular pose is changed, the directional indications may be changed accordingly.

In addition, the descriptions related to "first", "second" and the like in the present disclosure are for descriptive objectives only and cannot be understood as indicating or implying its relative importance or implicitly indicating a number of technical features indicated. Thus, features defining "first" and "second" may explicitly or implicitly include at least one of the features. In the description of the present disclosure, the meaning of "plural" is at least two, such as two, three, etc., otherwise specifically defined.

In the present disclosure, terms "connected", "fixed" and the like should be understood in a broad sense, otherwise specified and defined. For example, "fixed" can be a fixed connection, a detachable connection, or an forming a part integrally; It can be a mechanical connection or an electrical connection; It can be a direct connection or an indirect connection through an intermediate medium; and it can be the communication between interior of two elements or the interaction between two elements, otherwise specifically defined. For those ordinary skilled in the art, the specific meanings of the aforementioned terms in the present disclosure can be understood according to practical conditions.

In addition, the technical solutions between the various examples can be combined with each other, but it must be based on the realization by ordinary skilled in the art. When the combination of technical solutions is contradictory or cannot be realized, it should be considered that the combination of such technical solutions does not exist and is not within the scope of protection claimed in the present disclosure.

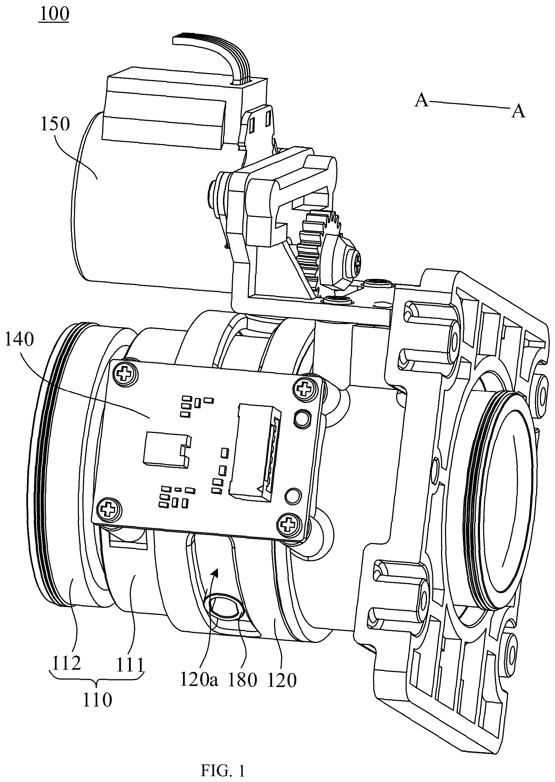

As shown in FIGS. 1-4, according to a first aspect, a focusing device 100 may be provided by some embodiments of the present disclosure. The focusing device 100 may include a focusing lens 110, a focusing member 120, a magnetic member 130, and a magnetic sensor 140.

The focusing lens 110 may include a focusing barrel 111 and a lens body 112. The lens body 112 may have an optical axis AA. The optical axis AA may be an axis passing through a center of the lens body 112. The lens body 112 may be movably disposed on the focusing barrel 111 along an extending direction of the optical axis AA. In some embodiments, the focusing barrel 111 may be sleeved outside the lens body 112, and the lens body 112 may be telescopically inserted into the focusing barrel 111, such that it may be possible to enable the lens body 112 to move relative to the focusing barrel 111 along the extending direction of the optical axis AA. An optical lens group may be installed in the lens body 112. A sharpness/definition of a projected image may be adjusted by focusing the focusing lens 110.

The focusing member 120 may be rotatably disposed on the focusing barrel 111 around the optical axis AA. In some embodiments, the focusing member 120 may be annular or ring-shaped, such that it may be possible to enable the focusing member 120 to fit closely with the focusing barrel 111, and space occupied may be relatively less. In some embodiments, a rotation angle of the focusing member 120 may be in a range from 40° to 120°, i.e., 40° ~ 120°.

The focusing member 120 may be in transmission fit with the lens body 112. When the focusing member 120 rotates, the focusing member 120 may drive the lens body 112 to move along the optical axis AA. It should be noted that, in the embodiments, a rotation of the focusing member 120 may be converted into a linear movement of the lens body 112, such that it may be possible to enable the lens body 112 not to rotate relative to the focusing barrel 111.

In the embodiments of the present disclosure, when the focusing device 100 performs focusing, the lens body 112 may not rotate relative to the focusing barrel 111, such that it may be possible to enable wear between the lens body 112 and the focusing barrel 111 to be relatively less/lower, and thus the service life may be relatively longer, and an operation may be relatively quieter. A gap between the lens body 112 and the focusing barrel 111 may be less, such that it may be capable of preventing dust and liquid from entering interior as much as possible, thereby improving a capability for dust-proof and moisture-proof. Moreover, when the lens body 112 moves, the optical axis AA of the lens body 112 may be less likely to offset, such that focusing accuracy may be relatively higher. In addition, the focusing device may be more stable during transportation or movement, which may be less likely to focus deviation caused by shaking.

In addition, since the lens inside the lens barrel may be difficult to manufacture/process into an absolutely circular shape, the rotation of the lens body 112 relative to the focusing barrel 111 may cause changes in an optical effect, thereby affecting the projection effect. The focusing device 100 provided in some embodiments of the present disclosure may have a stable optical effect.

As shown in FIGS. 1-4, in some embodiments, a spiral/helical groove 120a may be defined on the focusing member 120. The spiral groove 120a may have an axis. The spiral groove 120a may extend spirally around the axis. The axis of the spiral groove 120a may coincide with the optical axis AA. The focusing device 100 may further include a transmission member 180. The transmission member 180 may be connected to the lens body 112 and slidably disposed in the spiral groove 120a. The spiral groove 120a may have a tendency to extend along a rotation direction around the optical axis AA and a tendency to extend along the extending direction of the optical axis AA. That is, the extending direction of the spiral groove 120a may have a component along the optical axis AA. Therefore, when the focusing member 120 rotates, a groove wall of the spiral groove 120a may be configured to push the transmission member 180 to move along the extending direction of the optical axis AA. That is, it may be possible to enable the rotation of the focusing member 120 to be converted into the linear movement of the lens body 112. It should be noted that the spiral groove 120a does not need to extend a full circle around the axis. In some embodiments, the spiral groove 120a may extend one-fifth of a circle around the axis. A length of the spiral groove 120a may be set according to actual requirements, which is not limited herein.

In some embodiments, the transmission member 180 may be disposed in the spiral groove 120a. Alternatively, the transmission member 180 may be flush with the spiral groove 120a. That is, the transmission member 180 may be flush with an opening end or a peripheral surface the spiral groove 120a. Therefore, it may be possible to prevent the transmission member 180 from protruding outside the spiral groove 120a and rubbing against other components.

In other embodiments, the focusing member 120 may be threadedly engaged with the lens body 112, such that it may also possible to convert the rotation of the focusing member 120 into the linear movement of the lens body 112. In some embodiments, internal threads may be arranged on an inner wall of the focusing member 120. External threads may be arranged on an outer wall of the lens body 112. The internal threads of the focusing member 120 may be engaged with the external threads of the lens body 112. In this way, the focusing member 120 may be capable of driving the lens body 112 to move when the focusing member 120 rotates. Of course, a transmission fit manner between the focusing member 120 and the lens body 112 may also be other existing manners, which is not limited herein.

As shown in FIGS. 1-4, in some embodiments, the focusing device 100 may further include a magnetic member 130 and a magnetic sensor 140. The magnetic member 130 may have a magnetic field. The magnetic sensor 140 may be configured to detect a magnetic signal of the magnetic member 130.

According to a principle of distance attenuation of magnetic fields, when a relative position between the magnetic member 130 and the magnetic sensor 140 is different, the magnetic sensor 140 may sense different magnetic signals B. According to an intensity of a sensed magnetic signal B of the magnetic member 130, the magnetic sensor 140 may be configured to determine a relative position between the magnetic sensor 140 and the magnetic member 130.

The focusing device 100 may have a movable component and a stationary component. During focusing, the movable component may generate a relative movement with respect to the stationary component. One of the magnetic member 130 and the magnetic sensor 140 may be disposed on the movable component, and the other of the magnetic member 130 and the magnetic sensor 140 may be disposed on the stationary component, such that a relative displacement may be generated between the magnetic member 130 and the magnetic sensor 140. When a distance between the magnetic member 130 and the magnetic sensor 140 is different, the magnetic signal of the magnetic member 130 detected by the magnetic sensor 140 may also be different. By detecting the magnetic signal of the magnetic member 130, a relative positional relationship between the movable component and the stationary component may be obtained, thereby implementing focusing.

In some embodiments, during an actual focusing process, it may be first necessary to obtain/acquire a distance d from the focusing barrel 111 to a projection surface. There may be a mapping relationship between the distance d and a position t of the lens body 112. That is, the mapping relationship between the distance d and a position t of the lens body 112 may be referred to a first mapping relationship. The first mapping relationship may be related to a lens group structure of the focusing lens 110. The mapping relationship may be obtained through measurement or theoretical calculation. Based on the first mapping relationship between the distance d and the position t of the lens body 112, a position t of the lens body 112 corresponding to a projected image with the highest sharpness may be obtained when the distance from the focusing barrel 111 to the projection surface is d.

However, there may also be another mapping relationship between the position of the lens body 112 and the magnetic signal B sensed by the magnetic sensor 140. That is, the mapping relationship between the position of the lens body 112 and the magnetic signal B sensed by the magnetic sensor 140 may be referred to a second mapping relationship. The second mapping relationship may also be obtained through actual measurement or theoretical calculation. Therefore, there may also be yet another mapping relationship between the distance d and the magnetic signal B, where the distance d is the distance from the focusing barrel 111 to the projection surface, and the magnetic signal B is the magnetic signal sensed by the magnetic sensor 140. That is, the mapping relationship between the distance d and the magnetic signal B may be referred to a third mapping relationship. The third mapping relationship may be obtained based on the first mapping relationship and the second mapping relationship.

In the related art, an optical coupler sensing technology may be utilized to determine the rotation angle of a focusing ring, and a current position of the lens may be determined. However, position data can only be read at a position where an optical coupler is located, and a real-time position of the lens cannot be obtained.

In the embodiments, it may be not necessary to arrange the optical coupler, and the lens body 112 does not need to move to the position where the optical coupler is located. The focusing process may be completed by driving the lens to the magnetic signal B required by the magnetic sensor 140, such that it may be possible to shorten time required for the focusing process. In addition, in the embodiments, by arranging a single magnetic member 130, the magnetic sensor 140 may obtain a real-time position of the lens body 112 by sensing the magnetic signal of the single magnetic member 130, such that it may be possible to simplify computational complexity, thereby reducing a volume of the magnetic member 130 and reducing design cost.

In some embodiments, one of the magnetic member 130 and the magnetic sensor 140 may be fixedly disposed relative to the focusing member 120, and the other of the magnetic member 130 and the magnetic sensor 140 may be fixedly disposed relative to the focusing barrel 111. That is, when the magnetic member 130 is fixedly disposed relative to the focusing member 120 and the magnetic sensor 140 is fixedly disposed relative to the focusing barrel 111, the magnetic member 130 may be directly or indirectly connected to the focusing member 120, and the magnetic sensor 140 may be directly or indirectly connected to the focusing barrel 111. When the magnetic member 130 is fixedly disposed relative to the focusing barrel 111 and the magnetic sensor 140 is fixedly disposed relative to the focusing member 120, the magnetic member 130 may be directly or indirectly connected to the focusing barrel 111, and the magnetic sensor 140 may be directly or indirectly connected to the focusing member 120.

Generally speaking, compared with a linear movement amplitude of the lens body 112, a movement amplitude of the focusing member 120 relative to the focusing barrel 111 may be relatively larger. In this way, it may be possible to reduce the requirement on sensitivity of the magnetic sensor 140, precision of the lens components, and precision of a motor. In addition, since the movement amplitude of the magnetic member 130 relative to the magnetic sensor 140 is relatively larger, the magnetic sensor 140 may detect changes in a magnetic field of the magnetic member 130 more accurately, such that it may be possible to improve the focusing accuracy.

In some embodiments, one of the magnetic member 130 and the magnetic sensor 140 may be fixedly disposed relative to the lens body 112, and the other of the magnetic member 130 and the magnetic sensor 140 may be fixedly disposed relative to the focusing barrel 111. That is, when the magnetic member 130 is fixedly disposed relative to the lens body 112 and the magnetic sensor 140 is fixedly disposed relative to the focusing barrel 111, the magnetic member 130 may be directly or indirectly connected to the focusing barrel 111, and the magnetic sensor 140 may be directly or indirectly connected to the focusing barrel 111. When the magnetic member 130 is fixedly disposed relative to the focusing barrel 111 and the magnetic sensor 140 is fixedly disposed relative to the lens body 112, the magnetic member 130 may be directly or indirectly connected to the focusing barrel 111, and the magnetic sensor 140 may be directly or indirectly connected to the lens body 112.

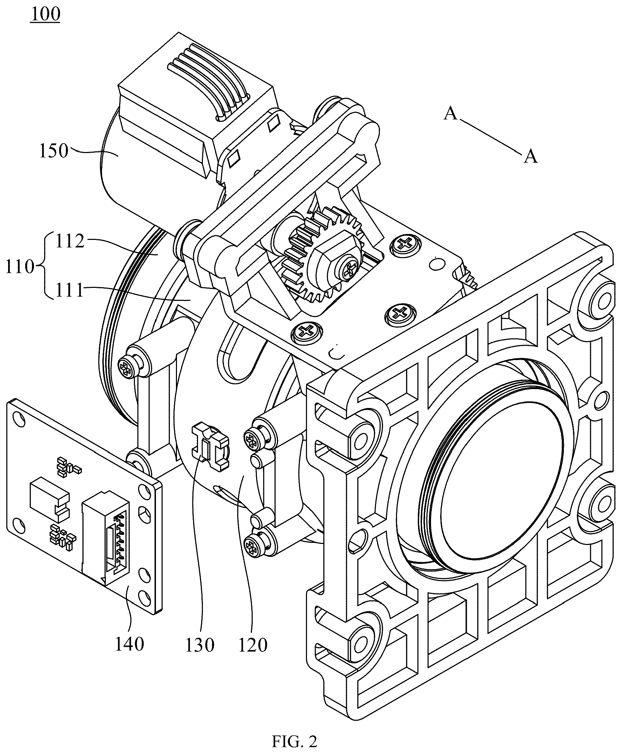

As shown in FIGS. 1 and 2, in some embodiments, one of the magnetic member 130 and the magnetic sensor 140 may be disposed on the focusing member 120, and the other of the magnetic member 130 and the magnetic sensor 140 may be disposed on the focusing barrel 111. When the focusing member 120 rotates, the magnetic member 130 may rotate around the optical axis AA relative to the magnetic sensor 140. That is, the magnetic member 130 may be disposed on the focusing member 120, and the magnetic sensor 140 may be disposed on the focusing barrel 111. Alternatively, the magnetic sensor 140 may be disposed on the focusing member 120, and the magnetic member 130 may be disposed on the focusing barrel 111. In some embodiments, the magnetic member 130 may be fixed on the focusing member 120 by means of adhesion, threaded connection, clamping/engaging, crimping, or the like. The magnetic sensor 140 may be fixed on the focusing barrel 111 by means of adhesion, threaded connection, clamping, crimping, or the like.

Based on the changes in the magnetic field of the magnetic member 130, the magnetic sensor 140 may acquire a rotational distance of the lens body 112 in real time, such that it may be possible to quickly and accurately obtain a real-time position of the focusing member 120 to be adjusted.

Compared with the transmission member 180, each of the focusing member 120 and the focusing barrel 111 may have a relatively larger size, such that it may be possible to provide sufficient space to arrange/accommodate the magnetic member 130 and the magnetic sensor 140. Therefore, it may be possible to reduce a difficulty of laying out the magnetic member 130 and the magnetic sensor 140.

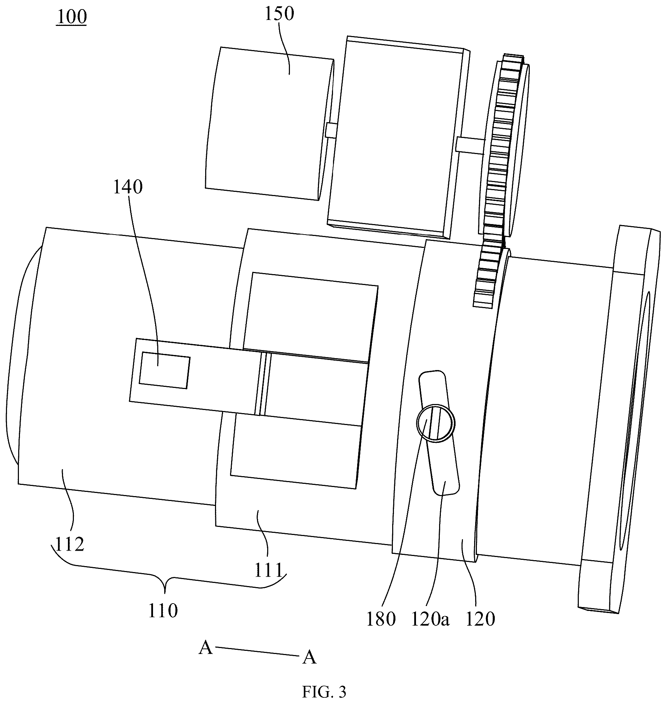

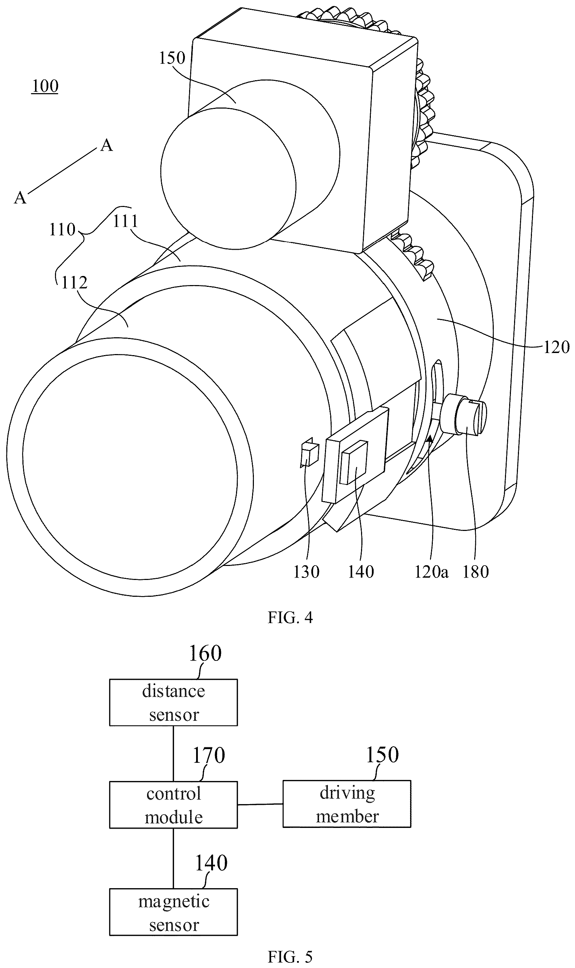

As shown in FIGS. 3 and 4, in some embodiments, one of the magnetic member 130 and the magnetic sensor 140 may be disposed on the lens body 112, and the other of the magnetic member 130 and the magnetic sensor 140 may be disposed on the focusing barrel 111. When the focusing member 120 rotates, the magnetic member 130 may move along the optical axis AA relative to the magnetic sensor 140. That is, the magnetic member 130 may be disposed on the lens body 112, and the magnetic sensor 140 may be disposed on the focusing barrel 111. Alternatively, the magnetic sensor 140 may be disposed on the lens body 112, and the magnetic member 130 may be disposed on the focusing barrel 111. In some embodiments, the magnetic member 130 may be fixed on the lens body 112 by means of adhesion, threaded connection, clamping, crimping, or the like. The magnetic sensor 140 may be fixed on the focusing barrel 111 by means of adhesion, threaded connection, clamping, crimping, or the like.

Compared with the transmission member 180, each of the lens body 112 and the focusing barrel 111 may have a relatively larger size, such that it may be possible to provide sufficient space to arrange the magnetic member 130 and the magnetic sensor 140. Therefore, it may be possible to reduce a difficulty of laying out the magnetic member 130 and the magnetic sensor 140.

Based on the changes in the magnetic field of the magnetic member 130, the magnetic sensor 140 may acquire a linear movement distance of the lens body 112 in real time, such that it may be possible to quickly and accurately obtain the real-time position of the focusing member 120 to be adjusted. Compared with a rotation amplitude of the focusing member 120, the linear movement amplitude of the lens body 112 may be usually relatively less, such that it may be possible to reduce a detection range of the magnetic sensor 140, thereby improving a detection speed. In addition, a surface area of the lens body 112 and a surface area of the focusing barrel 111 may be relatively larger, such that it may be possible to provide sufficient space to arrange the magnetic member 130 and the magnetic sensor 140, thereby enabling an arrangement position of the magnetic member 130 and an arrangement position of the magnetic sensor 140 to be relatively flexible.

As shown in FIG. 4, in some embodiments, a receiving groove may be defined on a peripheral wall of the lens body 112. The magnetic member 130 may be disposed in the receiving groove, such that it may be possible to facilitate assembly, thereby increasing a contact area between the magnetic member 130 and the lens body 112. In this way, it may be possible to further improve connection reliability and stability between the magnetic member 130 and the lens body 112.

In some embodiments, the magnetic member 130 may be disposed in the receiving groove, such that it may be possible to prevent the magnetic member 130 from protruding from the lens body 112 and colliding with other components such as the focusing barrel 111, etc.

In some embodiments, the magnetic member 130 may protrude from the lens body 112, such that the magnetic field of the magnetic member 130 may not be shielded as much as possible. Therefore, it may facilitate the magnetic sensor 140 in detecting the magnetic signal of the magnetic member 130.

As shown in FIG. 4, in some embodiments, the magnetic member 130 may be disposed at an end of the lens body 112 extending beyond/protruding from the focusing barrel 111, such that it may be possible to reduce an impact on extension and retraction of the lens body 112. When the lens body 112 moves telescopically, the magnetic member 130 may not be less likely to collide with the focusing barrel 111.

In some embodiments, the magnetic member 130 and the magnetic sensor 140 may be spaced apart along a reference axis. The reference axis may be approximately perpendicular to and intersected with the optical axis AA, such that it may be possible to reduce an interference between the magnetic member 130 and the magnetic sensor 140. Moreover, whether the magnetic member 130 and the magnetic sensor 140 rotate relative to each other or move relative to each other, a change in the distance between the magnetic member 130 and the magnetic sensor 140 may be relatively linear, such that the magnetic signal sensed by the magnetic sensor 140 may be relatively more linear.

In some embodiments, the magnetic member 130 may be disposed on the focusing member 120 or the lens body 112. The magnetic sensor 140 may be disposed on the focusing barrel 111. Generally speaking, a volume of the magnetic sensor 140 may be larger than that of the magnetic member 130. The magnetic member 130 may be disposed on the movable focusing member 120 or the movable lens body 112, such that it may be possible to reduce an impact on the focusing member 120 or the lens body 112. In addition, the magnetic sensor 140 needs to be connected to a wire, and it may be conducive to a wiring arrangement by disposing the magnetic sensor 140 on the fixed focusing barrel 111.

As shown in FIG. 5, in some embodiments, the focusing device 100 may further include a distance sensor 160, a driving member 150, and a control module 170.

The distance sensor 160 may be configured to measure a projection distance of the focusing lens 110. The projection distance may be referred to the distance d from the focusing barrel 111 to the projection surface. In some embodiments, the distance sensor 160 may be a time of flight (TOF) camera, or the like.

The driving member 150 may be in transmission connection with the focusing member 120. The driving member 150 may be configured to drive the focusing member 120 to rotate. In some embodiments, the driving member 150 may be a motor. The driving member 150 may drive the focusing member 120 to rotate by means of gear transmission. Alternatively, the driving member 150 may drive the focusing member 120 to rotate through other existing manners such as a pulley transmission, or the like.

The control module 170 may be electrically connected to the driving member 150, the distance sensor 160, and the magnetic sensor 140. The control module 170 may control the driving member 150 to rotate forward, rotate reverse, or stop rotating. The control module 170 may further be configured to obtain a distance value measured by the distance sensor 160 and the magnetic field sensed by the magnetic sensor 140.

The control module 170 may be configured to output a corresponding target magnetic signal according to the projection distance and control the driving member 150 to rotate, such that the magnetic signal detected by the magnetic sensor 140 may be the target magnetic signal. By arranging the control module 170 and the driving member 150, automatic focusing may be implemented.

Since a motion state of the lens body 112 may be monitored in real time by the magnetic sensor 140, there may be no deviation in a focusing position. In this way, it may be possible to reduce an error caused by rotational backlash of the driving motor or a gear transmission fit manner in the optical coupler focusing solution in the related art, such that the focusing accuracy may be relatively higher.

In some embodiments, the magnetic member 130 may include, but is not limited to, at least one of a magnet and a magnetic alloy element. The magnetic sensor 140 may include, but is not limited to, one or more of a linear tunnel magnetoresistance sensor, a linear Hall sensor, an anisotropic magnetoresistance sensor, and a giant magnetoresistance sensor. It should be understood that each of the above-mentioned sensors may be matched with the magnetic member 130 to achieve a good sensing effect, which may be conducive to accurate focusing. In some embodiments, the magnetic sensor 140 may be the linear tunnel magnetoresistance sensor or the linear Hall sensor. Both the linear tunnel magnetoresistance sensor and the linear Hall sensor may map changes in a linear distance of the magnetic member 130 relative to the sensor based on changes in a magnetic flux density.

According to a second aspect, a projection device may be provided by some embodiments of the present disclosure. The projection device may include the focusing device 100 and an optical assembly. The lens body 112 may be disposed at a light-emitting side of the optical assembly. In some embodiments, the optical assembly may include a light source, an imaging component, and the like. A type of the light source may be a light-emitting diode (LED), a laser, a bulb, or the like. A type of the imaging component may be a digital light processing (DLP), a three-liquid crystal display (3LCD), a liquid crystal on silicon (LCoS), or the like.

The above are only some embodiments of the present disclosure, and are not intended to limit the patent scope of the present disclosure. Any equivalent structure or process change made by using the contents of the present specification and drawings, or directly or indirectly applied in other related technical fields, shall be included in the protection scope of the present disclosure.

## Claims

1. A focusing device (100), **characterized by** comprising:
a focusing lens (110), comprising a focusing barrel (111) and a lens body (112), wherein the lens body (112) has an optical axis (AA), the lens body (112) is movably disposed on the focusing barrel (111) along an extending direction of the optical axis (AA);
a focusing member (120), rotatably disposed on the focusing barrel (111) around the optical axis (AA), and in transmission fit with the lens body (112), wherein the focusing member (120) is capable of driving the lens body (112) to move along the extending direction of the optical axis (AA) in a case where the focusing member (120) rotates, and the lens body (112) does not rotate relative to the focusing barrel (111);
a magnetic member (130); and
a magnetic sensor (140), configured to detect a magnetic signal of the magnetic member (130);
wherein one of the magnetic member (130) and the magnetic sensor (140) is fixedly disposed relative to the focusing member (120) or the lens body (112), and the other of the magnetic member (130) and the magnetic sensor (140) is fixedly disposed relative to the focusing barrel (111).

2. The focusing device (100) according to claim 1, wherein one of the magnetic member (130) and the magnetic sensor (140) is disposed on the focusing member (120), the other of the magnetic member (130) and the magnetic sensor (140) is disposed on the focusing barrel (111), and the magnetic member (130) rotates around the optical axis (AA) relative to the magnetic sensor (140) in a case where the focusing member (120) rotates.

3. The focusing device (100) according to claim 1, wherein
in a case where the magnetic member (130) is fixedly disposed relative to the focusing member (120) and the magnetic sensor (140) is fixedly disposed relative to the focusing barrel (111), the magnetic member (130) is directly or indirectly connected to the focusing member (120), and the magnetic sensor (140) is directly or indirectly connected to the focusing barrel (111); or
in a case where the magnetic member (130) is fixedly disposed relative to the focusing barrel (111) and the magnetic sensor (140) is fixedly disposed relative to the focusing member (120), the magnetic member (130) is directly or indirectly connected to the focusing barrel (111), and the magnetic sensor (140) is directly or indirectly connected to the focusing member (120).

4. The focusing device (100) according to claim 1, wherein one of the magnetic member (130) and the magnetic sensor (140) is disposed on the lens body (112), the other of the magnetic member (130) and the magnetic sensor (140) is disposed on the focusing barrel (111), and the magnetic member (130) rotates around the optical axis (AA) relative to the magnetic sensor (140) in a case where the focusing member (120) rotates.

5. The focusing device (100) according to claim 1, wherein the magnetic member (130) is disposed on the lens body (112), and the magnetic sensor (140) is disposed on the focusing barrel (111);
a receiving groove is defined on a peripheral wall of the lens body (112), and the magnetic member (130) is disposed in the receiving groove; or
the magnetic member (130) is disposed at an end of the lens body (112) extending out of the focusing barrel (111).

6. The focusing device (100) according to any one of claims 1-5, wherein the magnetic member (130) and the magnetic sensor (140) are spaced apart along a reference axis, and the reference axis is perpendicular to and intersected with the optical axis (AA).

7. The focusing device (100) according to any one of claims 1-4, wherein the magnetic sensor (140) is disposed on the focusing barrel (111).

8. The focusing device (100) according to any one of claims 1-5, wherein a spiral groove (120a) is defined on the focusing member (120), and an axis of the spiral groove (120a) coincides with the optical axis (AA); and
the focusing device (100) further comprises a transmission member (180), and the transmission member (180) is connected to the lens body (112) and slidably disposed in the spiral groove (120a).

9. The focusing device (100) according to claim 8, wherein an extending direction of the spiral groove (120a) has a component along the optical axis (AA), and in a case the focusing member (120) rotates, a groove wall of the spiral groove (120a) is configured to push the transmission member (180) to move along the extending direction of the optical axis (AA).

10. The focusing device (100) according to any one of claims 1-5, further comprising:
a distance sensor (160), configured to measure a projection distance of the focusing lens (110);
a driving member (150), in transmission connection with the focusing member (120) and configured to drive the focusing member (120) to rotate; and
a control module (170), electrically connected to the driving member (150), the distance sensor (160), and the magnetic sensor (140);
wherein the control module (170) is configured to output a corresponding target magnetic signal according to the projection distance and control the driving member (150) to rotate, and the magnetic signal detected by the magnetic sensor (140) is the target magnetic signal.

11. The focusing device (100) according to any one of claims 1-10, wherein the focusing barrel (111) is sleeved outside the lens body (112), and the lens body (112) is telescopically inserted into the focusing barrel (111).

12. The focusing device according to any one of claims 1-11, wherein the focusing member (120) is annular, and a rotation angle of the focusing member (120) is in a range from 40° to 120°.

13. The focusing device (100) according to any one of claims 1-11, wherein internal threads are arranged on an inner wall of the focusing member (120), external threads are arranged on an outer wall of the lens body (112), and the internal threads of the focusing member (120) are engaged with the external threads of the lens body (112).

14. The focusing device (100) according to claim 1, wherein
in a case where the magnetic member (130) is fixedly disposed relative to the lens body (112) and the magnetic sensor (140) is fixedly disposed relative to the focusing barrel (111), the magnetic member (130) is directly or indirectly connected to the focusing barrel (111), and the magnetic sensor (140) is directly or indirectly connected to the focusing barrel (111); or
in a case where the magnetic member (130) is fixedly disposed relative to the focusing barrel (111) and the magnetic sensor (140) is fixedly disposed relative to the lens body (112), the magnetic member (130) is directly or indirectly connected to the focusing barrel (111), and the magnetic sensor (140) is directly or indirectly connected to the lens body (112).

15. A projection device, **characterized by** comprising:
the focusing device (100) according to any one of claims 1-14; and
an optical assembly;
wherein the lens body (112) is disposed at a light-emitting side of the optical assembly.
